# EUROPEAN PATENT APPLICATION

(11) **EP 2 001 252 A1**
(43) Date of publication of application: **10.12.2008**
(21) Application number: 07011064.8
(22) Date of filing: 05.06.2007
(51) Int. Cl.: H04Q 7/38

(54) **Wireless network for a multimedia broadcast multicast service**

(71) Applicant: Nokia Siemens Networks Oy, 02610 Espoo (FI)
(72) Inventor: Breuer, Volker Dr., 16727 Bötzow (DE); Kottkamp, Meik, 81379 München (DE)
(74) Representative: Schober, Ralf Stefan

(57) **Abstract**

A mobile wireless network (1),
wherein user specific signalling data transmitted on at least one unicast carrier frequency f_{unicast} in a signalling channel from a base station (2) to a mobile station (5) are mirrored during a transmission of data of a multimedia broadcast multicast service (MBMS) from said unicast carrier frequency (f_{unicast}) to a carrier frequency (f_{MBMS}) of said multimedia broadcast multicast service (MBMS).

## Description

The invention relates to a mobile wireless network which provides for mobile devices multimedia broadcast multicast services.

MBMS (Multimedia Broadcast Multicast Services) is a 3GPP feature for efficient resource utilization in the case of point-to-point (PTP) and point-to-multipoint (PMP)-data transmission. Multimedia broadcast multicast services provide multimedia data, for example video data for a plurality of users. Multimedia broadcast multicast services transmit multimedia data simultaneously to several users of mobile stations MS also called user entities UE. Multimedia broadcast multicast services have two operation modes, i. e. a broadcast transmission mode and a multicast transmission mode. For both operation modes, the access network can determine the density of users in each cell of the mobile wireless network and determine whether to establish a point-to-point link or a point-to-multipoint link via an air interface. In a broadcast data transmission, multimedia data is received by all mobile stations. A multicast data transmission is received by those mobile stations whose users have registered to this service. The difference between multimedia broadcast multicast services and conventional transmission methods, such as television is that the multimedia data is not transmitted in a dedicated frequency band by a transmitter but via a mobile wireless network, such as the UMTS mobile wireless network. Accordingly, a mobile network operator does not have to acquire further frequencies for MBMS and does not have to provide a separate network infrastructure. Furthermore, multimedia broadcast multicast services allow to offer services depending on the location of the mobile station MS which is linked via the air interface to a base station BS of a cell.

Multimedia data of a multimedia broadcast multicast services are transmitted via a corresponding carrier frequency or carrier frequency band provided for this MBMS service and in the general case may be shared with other services (voice, data, etc) on the same carrier frequency or carrier frequency band. For optimization the multimedia data of the multimedia broadcast multicast service are transmitted via a predetermined MBMS carrier frequency in different cells of the mobile wireless network, which allows a mobile station UE combining of the MBMS signals at cell borders, i.e. offering a significant performance improvement.

Besides the data transmission channel, additional signalizing channels are provided for transmitting user specific signalling data. Part of the signalling is the indication of incoming services e.g. voice calls, for a specific UE. Such signalizing information may be transmitted, for example, by a paging indicator channel PICH. The paging indicator channel PICH is a downlink data transmission channel having a fixed data rate for the transmission of paging data. The paging indicator channel PICH is provided for informing the mobile station MS whether the mobile station receives paging data via a corresponding SCCPCH data channel. Via the paging indicator channel PICH, so-called paging indicators PI are transmitted establishing a downlink data transmission. A secondary common control physical channel (SCCPCH) is assigned to the paging indicator channel PICH for transmitting the paging channel PCH. The paging channel PCH is a channel of the transport layer which is provided for multicast messages on a downlink DL to mobile stations MS which are also called user entities UE. The paging indicator channel PICH informs the mobile station that it might be paged. The mobile station MS or user equipment UE does not have to monitor permanently the assigned secondary common control physical channel (SCCPCH) to determine whether it is indeed paged. Since the mobile equipment UE or mobile station MS does not have to monitor the SCCPCH channel battery energy and processor capacity is saved. The paging indicator channel PICH transmits the paging indicators PI which are supplied by higher protocol layers. The frame structure of a paging indicator channel PICH comprises, for instance 300 bits/ms., wherein 288 bits contain time-multiplexed the different user specific paging indicators PI. Depending on the cell configuration 18, 36, 72, 144, paging indicators PI can be multiplexed by the paging indicator channel PICH. For receiving simultaneously multimedia data of a multimedia broadcast multicast service (MBMS) which are transmitted on a dedicated MBMS-carrier frequency, and data of a conventional unicast service, such as telephone call which are transmitted on another unicast carrier frequency it is necessary to provide two receivers within the mobile station MS, i. e. the provision of a dual receiver mobile station or a dual receiver user entity UE. Dual receivers UE are provided for parallel reception of MBMS and unicast services by the user. The provision of two receivers for simultaneous reception of MBMS and CS/PS-service increases the complexity of the mobile station MS and increases also the power consumption of the mobile station MS thus reducing the operation time of the mobile station. On the other hand, providing a user equipment UE or a mobile station MS with only one receiver a tuning from the carrier frequency of said multimedia broadcast multicast service MBMS to another frequency, for instance to monitor whether paging data is provided for the mobile station MS leads to disturbing interruptions of the continuous multimedia data stream, thus for instance diminishing the quality of a displayed video signal. Simultaneous reception of MBMS and unicast services does not place a general requirement, possibly only for high end terminals. However being notified of an incoming service during an ongoing MBMS session is required.

Accordingly, it is an object of the present invention to provide a method and a system allowing a continuous reception of a multimedia data stream of a multimedia broadcast multicast service by a mobile station having only one receiver which can at the same time receive signalling data.

The invention provides a mobile wireless network, wherein user specific signalling data transmitted on at least one unicast carrier frequency is transmitted in a signalizing channel from a base station to a mobile station are mirrored during transmission of data of a multimedia broadcast multicast service (MBMS) from said unicast carrier frequency to a carrier frequency of said multimedia broadcast multicast service.

In an embodiment, the signalizing channel is provided for transmitting user specific paging data indicating an incoming voice service or data call.

In an embodiment, the signalizing channel is formed by a paging indicator channel (PICH).

In an embodiment of the mobile wireless network according to the present invention, the mobile wireless network comprises an access network and a core network.

In an embodiment of the mobile wireless network according to the present invention, the user specific signalling data is mirrored in the access network.

In an embodiment of the mobile wireless network according to the present invention, the user specific signalling data is mirrored by a base station of said access network.

In an embodiment of the mobile wireless network according to the present invention, all data in the signalizing channel is mirrored.

In an alternative embodiment of the mobile wireless network according to the present invention, not all data of the signalizing channel is mirrored but only the user specific signalling data of those users, which receive an ongoing MBMS session.

In an embodiment of the mobile wireless network according to the present invention, user specific signalling data transmitted on different unicast frequencies of a signalizing channel are multiplexed on a carrier frequency of a multimedia broadcast multicast service.

In an embodiment of the mobile wireless network according to the present invention, the mobile wireless network is formed by an UMTS mobile wireless network.

The invention further provides a mobile station for a mobile wireless network, wherein user specific signalling data transmitted on at least one unicast carrier frequency in a signalizing channel from a base station to said mobile station is mirrored during a transmission of data of a multimedia broadcast multicast service from the unicast carrier frequency to a carrier frequency of the multimedia broadcast multicast service.

The invention further provides a method for providing a continuous multimedia data stream of a multimedia broadcast multicast service for a mobile station having a receiver, wherein user specific signalling data transmitted on at least one unicast carrier frequency in a signalizing channel from a base station to the mobile station are mirrored during a data transmission of data of a multimedia broadcast multicast service from said unicast carrier frequency to a carrier frequency of said multimedia broadcast multicast service.

In the following, embodiments of the mobile wireless network and the method for providing a continuous multimedia data stream for a mobile station are described with reference to the enclosed figures.

Figure 1 shows a diagram of an embodiment of the mobile wireless network according to the present invention.

Figure 2 shows a block diagram for illustrating a possible architecture of the mobile wireless network according to the present invention.

Figure 3 shows a diagram for illustrating the functionality of the mobile wireless network according to the present invention.

Figures 4A, 4B show diagrams for illustrating an embodiment of a process of mirroring paging data as employed by the mobile wireless network according to the present invention.

Figures 5A, 5B show diagrams for illustrating another embodiment of a process of mirroring paging data as employed by the mobile wireless network according to the present invention.

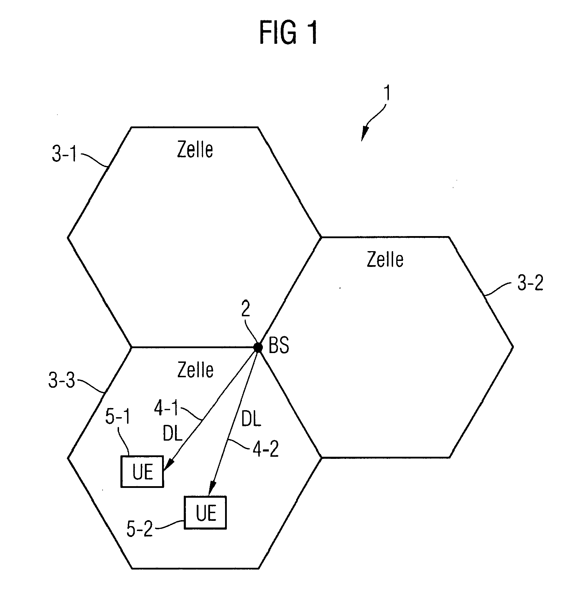

As can be seen from figure 1, the mobile wireless network 1 according to the present invention is formed in an embodiment by a cellular mobile wireless network. The mobile wireless network 1 comprises a base station 2 of an access network which is provided for three neighboring cells 3-1-, 3-2, 3-3. The base station 2 provides in at least one cell a multimedia broadcast multicast service MBMS, for instance in cell 3-3 as shown in figure 1. The multimedia data of the multimedia broadcast multicast service MBMS are transmitted in a downlink 4 to different mobile stations 5 within the cell 3-3. In a possible embodiment, data transmission of the multimedia data from the base station 2 to the mobile stations 5 are performed on a carrier frequency or a carrier frequency band of the MBMS service.

In the mobile wireless network 1 according to the embodiment shown in figure 1, mobile stations 5-1, 5-2 receive a multimedia data of the MBMS service on a carrier frequency f_{MBMS} of the multimedia broadcast multicast service MBMS via a downlink 4-1, 4-2.

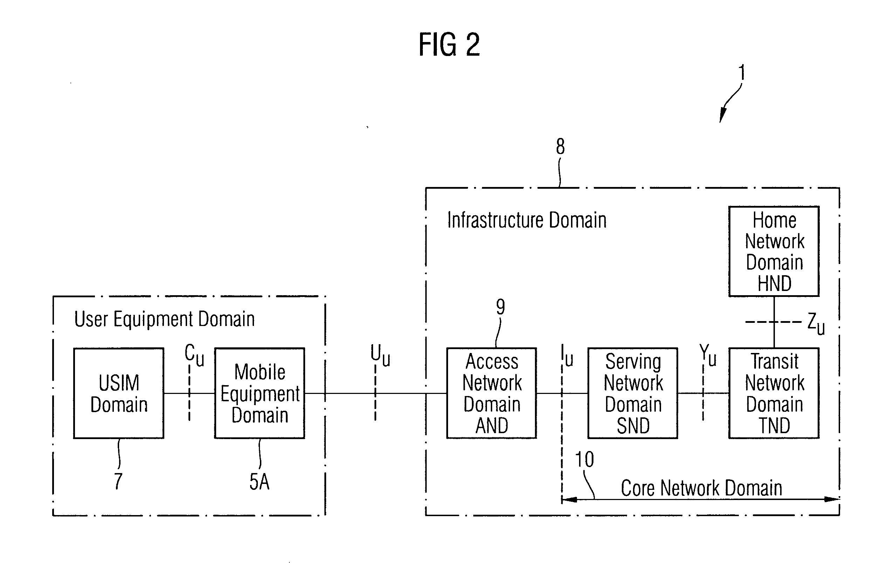

Figure 2 shows a block diagram of a possible architecture of the mobile wireless network 1 according to the present invention. In the embodiment shown in figure 2, the mobile wireless network 1 is formed by a UMTS mobile wireless network. The mobile wireless network 1 comprises two domains, i. e. a user equipment domain 6 consisting of a mobile equipment domain 5 and a USIM domain 7. The USIM module 7 comprises all information and functions which are necessary for encrypting and authentication of the mobile device. The USIM module 7 is, for instance provided on a SIM-card. The mobile equipment domain 5 is linked via an air interface to an infrastructure domain 8 of the mobile wireless network 1. The infrastructure domain 8 comprises an access network domain 9 and a core network domain 10. The access network domain 9 is, for instance formed by a UMTS terrestrial radio access network UTRAN. The core network domain 10 comprises several transport layer networks, such as PDM, GSM or ISDN which are inter-connected by inter-working units with each other. The core network domain 10 comprises a serving network domain SND, a home network domain HND and a transit network domain TND. The mobile wireless network 1 can have different access networks 9, wherein each access network 9 comprises at least one base station 2 for data transmission of data via a downlink 4 to mobile stations 5 which are located in the corresponding cell.

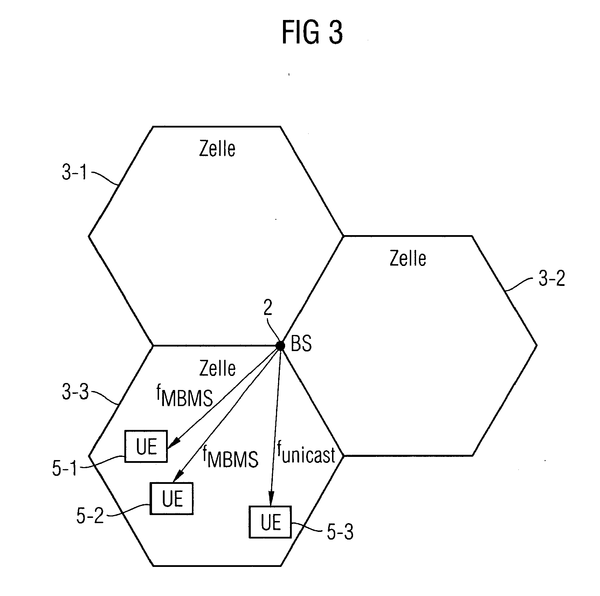

Figure 3 shows a further example for illustrating a process of mirroring of paging data as employed by the mobile wireless network 1 according to the present invention. In the given example, two mobile stations, i. e. mobile station 5-1, 5-2 receive multimedia broadcast multicast data on a corresponding carrier frequency f_{MBMS} of the multimedia broadcast multicast service MBMS. Further, a mobile station 5-3 receives data of a conventional service, such as a telephone call via a unicast carrier frequency f_{unicast}.

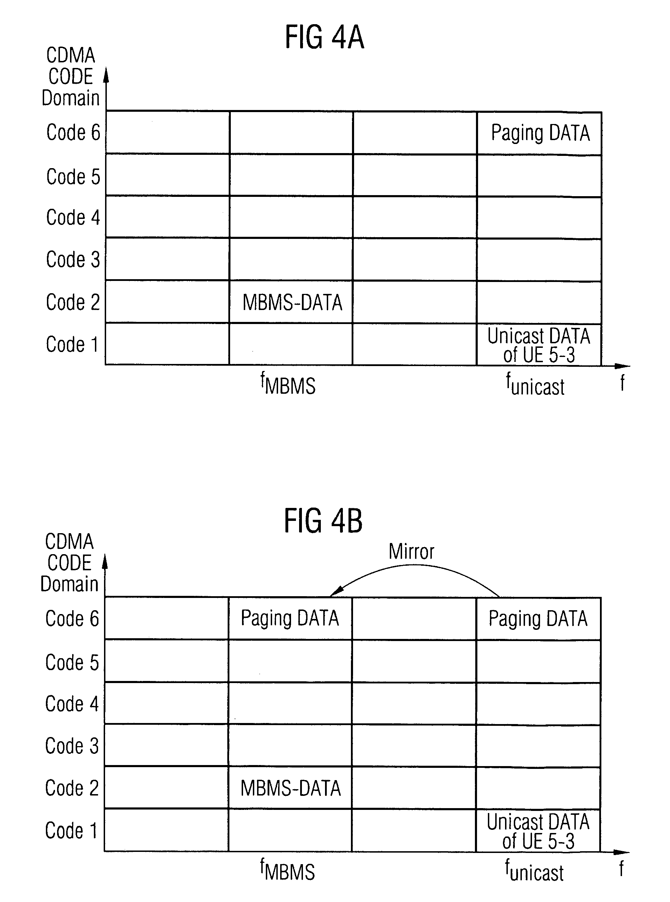

Figures 4A, 4B show an exemplary embodiment of mirroring in a W-CDMA system comprising orthogonal codes.

Figure 4A shows a situation before a mirroring operation takes place. As can be seen from figure 4A, the third mobile station 5-3 receives data on a unicast carrier frequency f_{UNICAST}, e.g. internet browsing or a voice call. The other two mobile stations 5-1, 5-2 in the cell 3-3 receive MBMS-data on a carrier frequency f_{MBMS} of the MBMS service. The unicast data and the MBMS data are transmitted by the base station 2 using different orthogonal codes allowing parallel reception by a suitable receiver, e.g. Rake receiver. The MBMS data does not have to be transmitted in all cells of the mobile wireless network but for example only in some cells, such as cell 3-3 shown in figure 3.

The method according to the present invention can also be applied to other systems, such as a TDMA system. In this case, the paging data is mirrored to a predetermined time slot TS.

In a conventional system, if the mobile station 5-1 wishes to receive paging data from an incoming call, it has to tune its receiver from the carrier frequency f_{MBMS} of the MBMS service to the unicast frequency f_{UNICAST} thus degrading the quality of the MBMS service. The other possibility, i. e. the provision of a second receiver increases the complexity of the mobile station 5.

In the wireless network 1 according to the present invention, user specific signalling data, such as paging data which is coded in the given example of figure 4A by code 6 and transmitted on the unicast carrier frequency f_{unicast} is mirrored, i. e. copied or duplicated in real time to the carrier frequency f_{MBMS} of the multimedia broadcast multicast service MBMS as shown in figure 4B. This has the advantage that the mobile station 5 does not need a second receiver to receive paging data at the same time so that the data stream of the MBMS service is not interrupted. The receiver of the mobile station 5 according to the present invention allows decoding several codes simultaneously. In an embodiment, the mobile station 5 comprises a Rake receiver. Accordingly, the mobile station 5 in the mobile wireless network 1 according to the present invention can receive MBMS data and paging data transmitted via a paging indicated channel PICH simultaneously without diminishing the quality of the received data.

The rake receiver is a radio receiver designed to counter the effects of multipath fading. It does this by using several "sub-receivers" each delayed slightly in order to tune in to the individual multipath components. Each component is decoded independently, but at a later stage combined in order to make the most use of the different transmission characteristics of each transmission path. This results in a higher signal-to-noise ratio (or Eb/N0) in a multipath environment than in a "clean" environment. The rake receiver is so named because of its analogous function to a garden rake, each finger collecting bit or symbol energy similarly to how tines on a rake collect leaves.

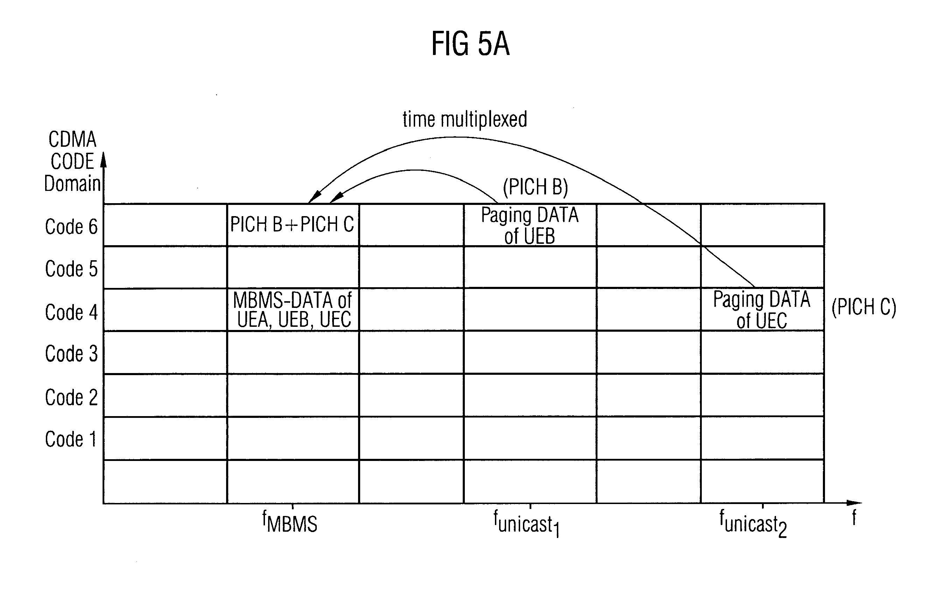

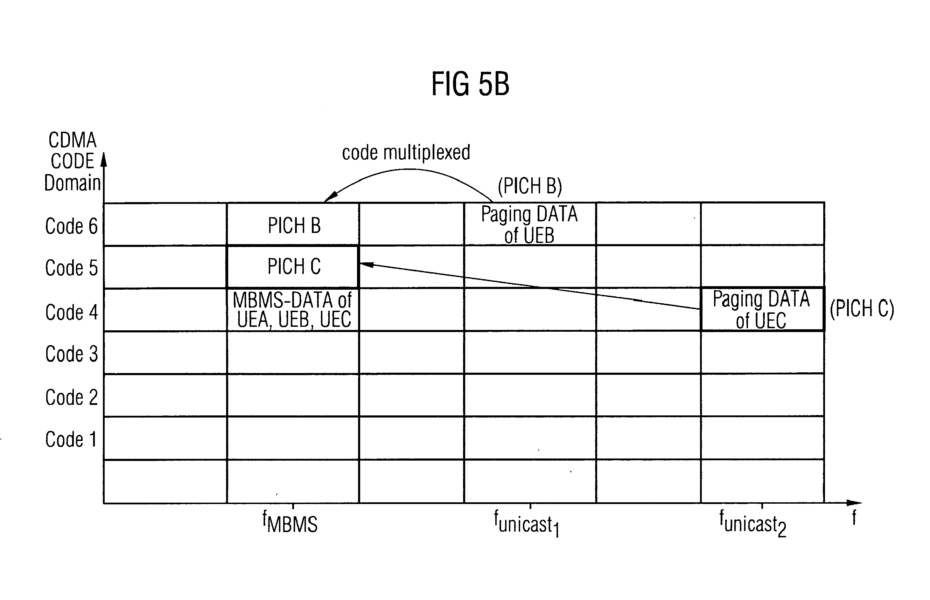

Figures 5A, 5B show a further embodiment of the mobile wireless network 1 according to the present invention.

In the given example of figure 5A, a mobile stations UE-A, UE-B and UE-C receive MBMS data on a carrier frequency f_{MBMS} of a multimedia broadcast multicast service MBMS encoded with CDMA code 4. In the given example, the paging data of the mobile station UEB is encoded on carrier frequency f_{unicast1} with CDMA code 6 and the paging data of the other mobile station UEC is encoded on carrier frequency f_{unicast2} with CDMA code 4. In the given example of figure 5A, the paging data of the first paging indicator channel PICHB (code 6; f_{unicast1}) used by the mobile station UEB and the second paging data of the paging indicator channel PICHC (code 4; f_{unicast2}) used by the mobile station UEC are time-multiplexed to the carrier frequency f_{MBMS} using CDMA code 6.

In the other example shown in figure 5, the paging indicator channel PICHB for the mobile station UEB and the paging indicator channel PICHC for the other mobile station UEC are mirrored to the carrier frequency f_{MBMS} of the multimedia broadcast multicast service MBMS, wherein the first paging indicator channel PICHB is mirrored to CDMA code 6 and the other paging indicator channel PICHC is mirrored to the CDMA code 5 so that the paging indicator channels PICHB, PICHC are code-multiplexed comprising the same carrier frequency f_{MBMS}.

A mobile station UE is paged when it does not comprise a data connection to a base station. To receive incoming calls, the mobile station UE gets the paging data of the paging signalizing channel on the respective unicast frequency f_{unicast} while receiving the MBMS data.

The paging process shown in figures 4, 5 can be performed in the access network domain 9 of the wireless network 1 as shown in figure 2. In an embodiment, the mirroring of the user specific paging data is performed by a base station 2 of the access network domain 9. In an embodiment, all data within a paging signalling channel PICH is mirrored. In an alternative embodiment, only user specific paging data within the paging indicator channel PICH for those UEs having an ongoing MBMS session on f_{MBMS} is mirrored.

The mobile wireless network 1 according to the present invention allows a mobile station 5 to receive without any interruption multimedia data of a multimedia broadcast multicast service MBMS without the need to provide two receivers for different carrier frequencies. Since only one receiver is necessary, the technical complexity of a mobile station 5 and its power consumption can be reduced so that the operation time of the mobile station 5 is increased. The mobile wireless network 1 does also work with mobile stations 5 having more than one receivers but offers the possibility to provide a continuous multimedia data stream also for mobile stations 5 having only one receiver. When the user receives the user specific paging data, he can decide whether he interrupts the MBMS service and accepts the incoming unicast service, such as a voice call or incoming data session. An advantage of the mobile wireless network 1 according to the present invention is that it allows significantly improved MBMS performance while maintaining a low complexity of the mobile stations 5 and reducing power consumption of each mobile station 5. An existing mobile station can be used, i. e. the system according to the present invention allows improvement of performance of already existing mobile stations so that introduced MBMS services are directly available for mobile stations being already in the field.

## Claims

1. A mobile wireless network (1),
wherein user specific signalling data transmitted on at least one unicast carrier frequency f_{unicast} in a signalling channel from a base station (2) to a mobile station (5) is mirrored during a transmission of data of a multimedia broadcast multicast service (MBMS) from said unicast carrier frequency (f_{unicast}) to a carrier frequency (f_{MBMS}) of said multimedia broadcast multicast service (MBMS).

2. The mobile wireless network according to claim 1,
wherein said signalling channel is provided for transmitting user specific paging data.

3. The mobile wireless network according to claim 1,
wherein said user specific signalling data is mirrored by an access network of said mobile wireless network (1).

4. The mobile wireless network according to claim 3,
wherein said user specific signalling data is mirrored by a base station of said access network.

5. The mobile wireless network according to claim 1,
wherein said signalling channel is formed by a paging indicator channel (PICH).

6. The mobile wireless network according to claim 1,
wherein all data transmitted in said signalling channel is mirrored.

7. The mobile wireless network according to claim 1,
wherein only the transmitted user specific signalling data of UEs with an ongoing MBMS session is mirrored from said signalling channel.

8. The mobile wireless network according to claim 1,
wherein user specific signalling data transmitted on several unicast carrier frequencies are multiplexed on the carrier frequency (f_{MBMS}) of said multimedia broadcast multicast service (MBMS).

9. The mobile wireless network according to claim 1,
wherein said mobile wireless network (1) is formed by a UMTS-network.

10. A mobile station (5) for a mobile wireless network (1),
wherein user specific signalling data transmitted on at least one unicast carrier frequency (f_{unicast}) in a signalling channel from a base station (2) to said mobile station (5) are mirrored during a data transmission of data of a multimedia broadcast multicast service (MBMS) from said unicast carrier frequency (f_{unicast}) to a carrier frequency (f_{MBMS}) of said multimedia broadcast multicast service (MBMS).

11. A method for providing a continuous multimedia data stream of a multimedia broadcast multicast service (MBMS) for a mobile station (5) having a receiver,
wherein user specific signalling data transmitted on at least one unicast carrier frequency (f_{unicast}) in a signalling channel from a base station (2) to said mobile station (5) are mirrored during a data transmission of data of said multimedia broadcast multicast service (MBMS) from said unicast carrier frequency (f_{unicast}) to a carrier frequency (f_{MBMS}) of said multimedia broadcast multicast service (MBMS).
